# EUROPEAN PATENT APPLICATION

(11) **EP 3 261 013 A1**
(43) Date of publication of application: **27.12.2017**
(21) Application number: 16305768.0
(22) Date of filing: 24.06.2016
(51) Int. Cl.: G06F 21/72, G06F 21/51, H04L 29/06

(54) **SECURE SCRIPTING FOR CRYPTOGRAPHIC FUNCTIONS CUSTOMIZATION**

(71) Applicant: GEMALTO SA, 92190 Meudon (FR)
(72) Inventor: LACOUTURE, Dominique, 13881 Gemenos Cedex (FR); LAMBERT, Patrick, 13881 Gemenos Cedex (FR); DETCHEVERRY, Frank, 13881 Gemenos Cedex (FR)

(57) **Abstract**

The present invention relates to a method to customize cryptographic functions (LScr) using keys in a secure environment (SE) based on a secure scripting using certified domain specific language (DSL) having certified basic cryptographic primitives enforcing a set of given security rules and heuristics (R&H) used by a script development kit (SDK) dedicated to acquire a source script file (SScr) using the domain specific language, to transform the source script file (SScr) then including a signature and to filter non certification compliant source script, a script loader (ScrL) to load script files, to check signatures and to make resulting cryptographic functions (LScr) available in embedded software memory, said script loader (ScrL) sharing at least one signature cryptographic element (SK, EK) with the script development kit (SDK).

## Description

### FIELD OF THE INVENTION

The present invention relates to a method to customize cryptographic functions using keys in a secure environment, certified or not. The secured environment can be a cryptographic device, like an HSM, a smartcard for example, or any other devices like a smartphone, a computer...

The invention also pertains to a script compliant to certification obtained using the method of the invention.

### BACKGROUND OF THE INVENTION

Today it is necessary, for new businesses, new standards and new products, to develop/update custom cryptographic functions. These custom cryptographic functions are executed in a secured environment, i.e. cryptographic modules such as HSM or Smartcard or TEE, for security reasons. Currently these custom functions are embedded in the secure environment, so any update of these functions causes a whole new solution deployment and a renewal of any certification required by business and customers, such certification including NIST FIPS 140-2, Common Criteria, MEPS, BSI...

Currently certifications and solution deployments are thus long and costly, so are not compatible with a frequent update of the secure environment.

Moreover, these custom functions are long to develop or update and need both a security and a programming expertise to avoid any security weakness.

Also, some of these functions may include confidential algorithms that cannot be shared with certification organisms.

Further alternative and advantageous solutions would, accordingly, be desirable in the art.

### SUMMARY OF THE INVENTION

The present invention aims at producing a solution compliant with the certification requirements while offering flexibility and confidentiality in the production of custom functions.

The present invention is defined, in its broadest sense, as a method to customize cryptographic functions using keys in a secure environment based on a secure scripting using certified domain specific language having certified basic cryptographic primitives enforcing a set of given security rules and heuristics and a script development kit dedicated to filter using lexical and grammatical analysis non certification compliant source script, said method comprising the steps of:
- loading an embedded software in the secure environment, said embedded software comprising a script loader to load script files, to check signatures and to make resulting cryptographic functions available in embedded software memory, said script loader sharing at least one signature cryptographic element with the script development kit;
- receiving, from the script development kit installed in a script production entity, an intermediate file at the embedded software, said intermediate file being obtained through acquisition of a script file using the domain specific language and transformation of the script file by the script development kit, said intermediate file being further signed by the script development kit;
- checking the signature of the intermediate file;
- make the customized cryptographic functions available for use in embedded software memory.

The invention thus proposes a secure scripting solution comprising at least three main elements: a domain specific language (DSL) based on basic cryptographic primitives that enforces a set of given Security Rules and Heuristics, a script development kit that transforms a script file following this specific language into a signed intermediate file and a certified embedded software loaded into the secured environment, comprising a certified script loader that loads intermediate script files, checks their signature and makes resulting cryptographic functions available to callers, and a certified DSL interpreter to execute the intermediate file using input parameters passed by callers and to return the result. The cryptographic functions can be made available in embedded software memory or in real time. The script development kit helps users to write script files through lexical and grammatical analysis.

With the invention, the written script does not have to be further certified as primitive functions are already certified and as the script development kit dedicated filters using lexical and grammatical analysis non certification compliant source script.

It is essential for the invention that the certified script development kit checks the structure of the script, enabling to obtain a certified final customized function.

The invention enables that each cryptographic function doesn't need to be certified as the DSL enforces security rules and heuristics and the script development kit checks the structure of the intermediate script in relation with the security rules and heuristics. In the secure environment, only the embedded software, which is not updated frequently, has to be certified. So certification frequency and cost are low. Also, adding or updating a cryptographic function has no impact on the deployed solution. With the invention, no programming and security knowledge are needed to write a script. Another advantage is that adding or updating a cryptographic function can be done by several different entities and a short lead time is thus offered. Sensible functions can be encrypted to maintain confidentiality. With the invention, there is no need to provide NDA algorithms with certification organisms as certification is done upstream.

The invention applies to a secure environment providing key management features and customization capabilities. Already known secure environment key management can be used in cooperation with the invention.

According to a first embodiment, said signature cryptographic element is based on symmetric cryptography.

A secret key is thus previously shared by the script development kit SDK and the script loader ScrL.

According to a second embodiment, said signature cryptographic element is based on asymmetric cryptography.

The use of asymmetric cryptography requires the script loader to have the public key for any script development kit it is intended to interact with.

According to an advantageous feature, said intermediate file being received encrypted using an encryption cryptographic element, the method further comprises a step of decrypting the intermediate file before making cryptographic functions available for use.

The encryption adds a supplementary level in the security of the communications between the script development kit and the script loader.

Here also, the encryption can be based on symmetric or asymmetric cryptography.

The present invention also relates to a script compliant with certification obtained through the use of a script development kit dedicated to acquire a source script file elaborated with a certified domain specific language having certified basic cryptographic primitives enforcing a set of given security rules and heuristics, to transform the source script file to a signed intermediate script file and to filter non certification compliant source script and through the use of a script loader to load script files, to check signatures, the script being the resulting cryptographic functions made available in embedded software memory, said script loader sharing at least one signature cryptographic element with the script development kit.

Such a script created from certified cryptographic functions, those functions being primitive ones, and through a certified script development kit is compliant with certification. Based on a source script written in a certified domain specific language, the compliance is thus insured.

The invention also relates to a secure environment having an embedded software comprising a script loader to load script files, to check signatures and to make resulting cryptographic functions available in embedded software memory, said script loader sharing at least one signature cryptographic element with a script development kit in a script production entity.

Such a secure environment is provided with a signed intermediate script file and produces a customized cryptographic functionality ready to be called by users. By its generation, the cryptographic functionality thus obtained is compliant with certification.

The secure environment further comprises a DSL interpreter to execute the resulting cryptographic functions as made available by the script loader.

Such a DSL interpreter is certified to generate the customized cryptographic functionality from the cryptographic primitives as addressed using the domain specific language DSL.

At last, the invention concerns a script production entity comprising a script development kit sharing at least one signature cryptographic element with a script loader installed in a secure environment and dedicated to the acquisition of a source script file elaborated with a certified domain specific language having certified basic cryptographic primitives enforcing a set of given security rules and heuristics, to transform the source script file to a signed intermediate script file and to filter non certification compliant source script.

Such a script production entity enables the implementation of the method of the invention in a secure environment according to the invention.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 schematically represents the script management according to the invention and the loading of a script;
- Figure 2 schematically shows the execution of a loaded script;
- Figure 3 schematically shows a script execution and load operation according to the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

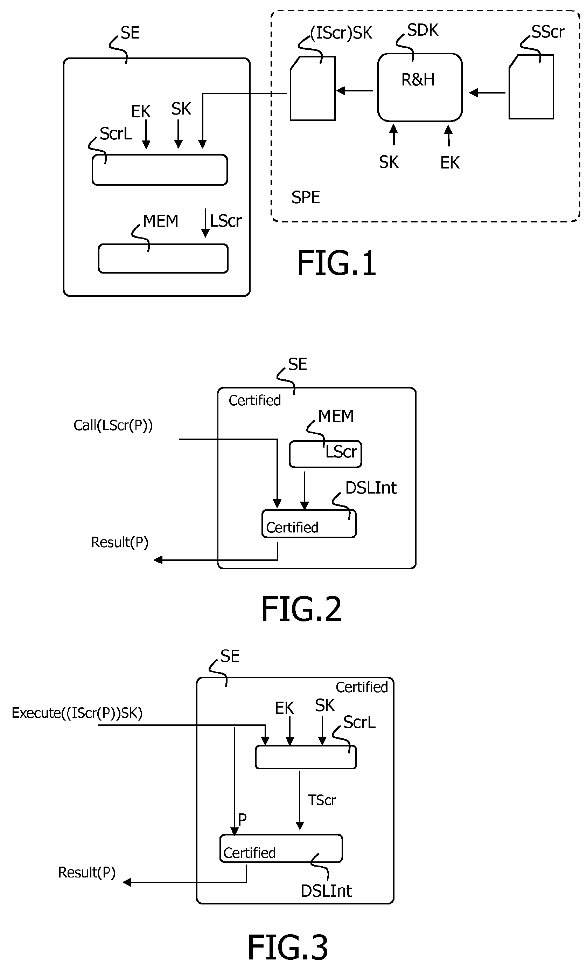

Figure 1 schematically represents the script management according to the invention and the loading of a script. The invention stands in a context comprising a script production entity SPE and a secure environment SE.

Preliminarily, an embedded software has been loaded in the secure environment, said embedded software comprising a certified script loader and a certified domain specific language (DSL) interpreter. The DSL is here a security oriented language.

Besides, the script production entity SPE comprises a script development kit SDK. The script production entity SPE can typically be a personal computer or any computing device able to get development kit software installed.

The development kit SDK enables a user, not specialized in secure script development, to write a cryptographic function script file using a certified domain specific language DSL. This language is such that it comprises instructions corresponding to certified cryptographic primitives enforcing a set of given security rules and heuristics R&H.

Also, the script development kit SDK is certified to check rules and heuristics (R&H) before transforming the script file into an intermediate file.

Cryptographic primitives are called using the language DSL to elaborate customized elaborated cryptographic functionalities.

Certified cryptographic primitives are:
- Symmetric key generation (3DES, AES)
- Symmetric encryption (3DES, AES)
- Symmetric decryption (3DES, AES)
- Symmetric key derivation (SP800-108, SP800-56C)
- Symmetric Signature (HMAC)
- Message Authentication code (SP800-38B, ISO9797)
- Key wrapping (RSA)
- Key unwrapping (RSA)
- Asymmetric key generation (RSA, ECC, DH)
- Asymetric Signature (RSA, ECC)
- Asymetric Signature Verification
- Key agreement (DH)
- Hash computation (MD5, SHA1, SHA2, SHA3).

Other cryptographic primitives might be added depending on state of the art (new cryptographic algorithms...).

Thus the user writes a source script SScr which is processed by the kit SDK in the script production entity SPE. An intermediate script IScr is thus obtained at the output of the kit SDK. This intermediate script IScr is signed using a signature key SK. Optionally the intermediate script IScr is also encrypted using an encryption key EK.

In case of symmetric cryptography, this signature key SK is shared with a dedicated script loader ScrL installed in the secure environment SE. This is the case illustrated on figure 1.

In case of asymmetric cryptography, the signature key is the private key of a public/private key pair, the public key being besides and previously transmitted to a dedicated script loader ScrL in the secure environment SE according to the well know asymmetric cryptography principles.

The dedicated script loader ScrL has been previously loaded in the secure element SE.

Using the shared signature key SK, or, in case of asymmetric cryptography, the public key, the script loader ScrL checks the signature of the intermediate script IScr as received. Optionally it also decrypts the intermediate file.

If signature is correct, a loaded script LScr is saved as such in a memory MEM to be available for callers. Stored in the secure environment SE, the loaded script LScr is thus certified as soon as the functions addressed through the DSL are certified.

The development of any new cryptographic functionality requires the implementation of steps from the writing of the source script to the call of the newly available functionality.

Figure 2 illustrates the execution of the loaded script LScr in the secure environment SE when the loaded script LScr is called Call(LScr(P)) using a set of input parameters P. In order to execute the loaded script LScr, the secure environment DSL comprises a certified DSL interpreter DSLInt. The certification of the interpreter DSLInt is done by a certification organism.

The certified interpreter DSLInt asked to call the script LScr(P) reads the loaded script LScr in the memory MEM of the secure environment SE. The loaded script LScr has been certified through signature verification and the interpreter being certified, the result Result(P) output from the secure environment SE is thus obtained through the application of certified cryptographic functionalities.

Another implementation for the execution of a certified script according to the invention is illustrated on figure 3. According to this implementation, the secure environment receives an execution instruction of an intermediate script IScr as produced by the kit SDK. Here the intermediate script Iscr is sent to the script loader ScrL and the execution parameters P are sent to the certified DSL interpreter DSLint.

The script loader ScrL makes a temporary script TScr available for direct execution using the DSL interpreter DSLInt after signature verification using the signature key SK also available aboard the script loader ScrL. Using the parameters and the temporary script, the DSL interpreter DSLInt produces a result Result(P). The certification of the cryptographic functionalities applied to the parameters is insured through the signature check enabling to check that the kit used to produce the intermediate script was certified and through the certification of the DSL interpreter DSLInt.

It is also preferable that the secure environment itself is certified.

Embedded software comprising the script loader and the DSL interpreter will seldom need certification and deployment which leads to cost and time savings.

As the language is certified, scripts can be developed by clients themselves and no security or programming knowledge is needed to develop script.

As a consequence, business function can be added or updated very often in a short timeframe and each business can have its own set of scripts. Also scripts are easy to reuse using a script repository.

With the second implementation, script can be sent in the cryptographic call which implies no memory limit in embedded software and no illicit usage of the function if stored in the secure environment. Also not all the functions will be present in the embedded software. It avoids loading function including NDA algorithms.

With the invention, each customer or business can handle its confidentiality and integrity using its own script encryption and signature keys.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted, along with the full range of equivalents to which the claims are entitled.

## Claims

**1.** Method to customize cryptographic functions (LScr) using keys in a secure environment (SE) based on a secure scripting using certified domain specific language (DSL) having certified basic cryptographic primitives enforcing a set of given security rules and heuristics (R&H) used in a script development kit (SDK) dedicated to further filter non certification compliant source script (SScr), said method comprising the steps of:
- loading an embedded software in the secure environment (SE), said embedded software comprising a script loader (ScrL) to load script files, to check signatures and to make resulting cryptographic functions available in embedded software memory, said script loader (ScrL) sharing at least one signature cryptographic element (SK,EK) with the script development kit (SDK);
- receiving, from the script development kit (SDK) installed in a script production entity (SPE), an intermediate file (IScr) at the embedded software, said intermediate file (IScr) being obtained through acquisition of a source script file (SScr) using the domain specific language and transformation of the source script file (SScr) by the script development kit (SDK), said intermediate file (IScr) being further signed ((IScr)SK) by the script development kit (SDK);
- checking the signature of the intermediate file (IScr);
- make the customized cryptographic functions (LScr) available for use in embedded software memory (MEM).

**2.** Method according to claim 1, wherein said signature cryptographic element (SK,EK) is based on symmetric cryptography.

**3.** Method according to claim 1, wherein said signature cryptographic element (SK;EK) is based on asymmetric cryptography.

**4.** Method according to claim 1, wherein, said intermediate file (IScr) being received encrypted using an encryption cryptographic element (EK), it comprises a step of decrypting the intermediate file (IScr) before making cryptographic functions available for use.

**5.** Method according to claim 1, wherein said encryption cryptographic element (EK) is based on symmetric cryptography.

**6.** Method according to claim 1, wherein said encryption cryptographic element (EK) is based on asymmetric cryptography.

**7.** Method according to one of preceding claims, said method comprising a preliminary step of loading an embedded software in the secure environment (SE), said embedded software comprising a certified script loader (ScrL) and a certified DSL interpreter (DSLint).

**8.** Method according to one of the preceding claims, wherein certified basic cryptographic primitives comprise at least one of the following:
- Symmetric key generation (3DES, AES)
- Symmetric encryption (3DES, AES)
- Symmetric decryption (3DES, AES)
- Symmetric key derivation (SP800-108, SP800-56C)
- Symmetric Signature (HMAC)
- Message Authentication code (SP800-38B, ISO9797)
- Key wrapping (RSA)
- Key unwrapping (RSA)
- Asymmetric key generation (RSA, ECC, DH)
- Asymetric Signature (RSA, ECC)
- Asymetric Signature Verification
- Key agreement (DH)
- Hash computation (MD5, SHA1, SHA2, SHA3).

**8.** Script (LScr) compliant with certification obtained through the use of a script development kit (SDK) dedicated to acquire a source script file (SScr) elaborated with a certified domain specific language having certified basic cryptographic primitives enforcing a set of given security rules and heuristics (R&H), to transform the source script file (SScr) to a signed intermediate script file ((IScr)SK) and to filter non certification compliant source script and through the use of a script loader (ScrL) to load script files, to check signatures, the script (LScr) being the resulting cryptographic functions made available in embedded software memory, said script loader (ScrL) sharing at least one signature cryptographic element (SK) with the script development kit (SDK).

**9.** Secure environment (SE) having an embedded software comprising a script loader (ScrL) to load script files ((IScr)SK), to check signatures and to make resulting cryptographic functions (LScr) available in embedded software memory (MEM), said script loader (ScrL) sharing at least one signature cryptographic element (SK) with a script development kit (SDK) in a script production entity (SPE).

**10.** Secure environment (SE) according to claim 9, further comprising a DSL interpreter (DSLInt) to execute the resulting cryptographic functions (LScr) as made available by the script loader (ScrL).

**11.** Script production entity (SPE) comprising a script development kit (SDK) sharing at least one signature cryptographic element with a script loader installed in a secure environment and dedicated to the acquisition of a source script file elaborated with a certified domain specific language having certified basic cryptographic primitives enforcing a set of given security rules and heuristics (R&H), to transform the source script file (SScr) to a signed intermediate script file ((IScr)SK) and to filter non certification compliant source script.

## Amended claims

### Amended claims in accordance with Rule 137(2) EPC.

1. Method to customize cryptographic functions (LScr) using keys in a secure environment (SE) based on a secure scripting using certified domain specific language (DSL) having certified basic cryptographic primitives enforcing a set of given security rules and heuristics (R&H) used in a script development kit (SDK) dedicated to further filter non certification compliant source script (SScr), said method comprising the steps of:
- loading an embedded software in the secure environment (SE), said embedded software comprising a script loader (ScrL) to load script files, to check signatures and to make resulting cryptographic functions available in embedded software memory, said script loader (ScrL) sharing at least one signature cryptographic element (SK,EK) with the script development kit (SDK);
- receiving, from the script development kit (SDK) installed in a script production entity (SPE), an intermediate file (IScr) at the embedded software, said intermediate file (IScr) being obtained through acquisition of a source script file (SScr) using the domain specific language and transformation of the source script file (SScr) by the script development kit (SDK), said intermediate file (IScr) being further signed ((IScr)SK) by the script development kit (SDK);
- checking the signature of the intermediate file (IScr);
- make the customized cryptographic functions (LScr) available for use in embedded software memory (MEM).

2. Method according to claim 1, wherein said signature cryptographic element (SK,EK) is based on symmetric cryptography.

3. Method according to claim 1, wherein said signature cryptographic element (SK;EK) is based on asymmetric cryptography.

4. Method according to claim 1, wherein, said intermediate file (IScr) being received encrypted using an encryption cryptographic element (EK), it comprises a step of decrypting the intermediate file (IScr) before making cryptographic functions available for use.

5. Method according to claim 1, wherein said encryption cryptographic element (EK) is based on symmetric cryptography.

6. Method according to claim 1, wherein said encryption cryptographic element (EK) is based on asymmetric cryptography.

7. Method according to one of preceding claims, said method comprising a preliminary step of loading an embedded software in the secure environment (SE), said embedded software comprising a certified script loader (ScrL) and a certified DSL interpreter (DSLInt).

8. Method according to one of the preceding claims, wherein certified basic cryptographic primitives comprise at least one of the following:
- Symmetric key generation (3DES, AES)
- Symmetric encryption (3DES, AES)
- Symmetric decryption (3DES, AES)
- Symmetric key derivation (SP800-108, SP800-56C)
- Symmetric Signature (HMAC)
- Message Authentication code (SP800-38B, ISO9797)
- Key wrapping (RSA)
- Key unwrapping (RSA)
- Asymmetric key generation (RSA, ECC, DH)
- Asymetric Signature (RSA, ECC)
- Asymetric Signature Verification
- Key agreement (DH)
- Hash computation (MD5, SHA1, SHA2, SHA3).

9. Script (LScr) compliant with certification obtained through the use of a script development kit (SDK) dedicated to acquire a source script file (SScr) elaborated with a certified domain specific language having certified basic cryptographic primitives enforcing a set of given security rules and heuristics (R&H), to transform the source script file (SScr) to a signed intermediate script file ((IScr)SK) and to filter non certification compliant source script and through the use of a script loader (ScrL) to load script files, to check signatures, the script (LScr) being the resulting cryptographic functions made available in embedded software memory, said script loader (ScrL) sharing at least one signature cryptographic element (SK) with the script development kit (SDK).

10. Secure environment (SE) having an embedded software comprising a script loader (ScrL) to load script files ((IScr)SK), to check signatures and to make resulting cryptographic functions (LScr) available in embedded software memory (MEM), said script loader (ScrL) sharing at least one signature cryptographic element (SK) with a script development kit (SDK) in a script production entity (SPE).

11. Secure environment (SE) according to claim 10, further comprising a DSL interpreter (DSLInt) to execute the resulting cryptographic functions (LScr) as made available by the script loader (ScrL).

12. Script production entity (SPE) comprising a script development kit (SDK) sharing at least one signature cryptographic element with a script loader installed in a secure environment and dedicated to the acquisition of a source script file elaborated with a certified domain specific language having certified basic cryptographic primitives enforcing a set of given security rules and heuristics (R&H), to transform the source script file (SScr) to a signed intermediate script file ((IScr)SK) and to filter non certification compliant source script.
